# EUROPÄISCHE PATENTSCHRIFT

(11) **EP 2 736 780 B1**
(45) Veröffentlichungstag und Bekanntmachung des Hinweises auf die Patenterteilung: **02.08.2017**
(21) Anmeldenummer: 12724969.6
(22) Anmeldetag: 29.05.2012
(51) Int. Cl.: B60T 1/10, B60T 8/24, B60T 8/26, B60T 8/32, B60T 8/40, B60T 8/42, B60T 8/48, B60T 13/66, F04C 2/10

(54) **BREMSSYSTEM FÜR EIN FAHRZEUG UND VERFAHREN ZUM BETREIBEN EINES BREMSSYSTEMS EINES FAHRZEUGS**
BRAKE SYSTEM FOR A VEHICLE AND METHOD FOR OPERATING A BRAKE SYSTEM OF A VEHICLE
SYSTÈME DE FREINAGE CONÇU POUR UN VÉHICULE ET PROCÉDÉ POUR FAIRE FONCTIONNER UN SYSTÈME DE FREINAGE D'UN VÉHICULE

(30) Priorität: 26.07.2011 DE 102011079860
(43) Veröffentlichungstag der Anmeldung: 04.06.2014
(73) Patentinhaber: Robert Bosch GmbH, 70442 Stuttgart (DE)
(72) Erfinder: KAESTNER, Frank, 74321 Bietigheim-Bissingen (DE); SCHEPP, Rene, 71336 Waiblingen (DE); ALAZE, Norbert, 71706 Markgroeningen (DE); GOSSE, Daniel, 10115 Berlin (DE)
(86) Internationale Anmeldenummer: PCT/EP2012/060034
(87) Internationale Veröffentlichungsnummer: WO 2013/013860

(56) Entgegenhaltungen:
- EP-A1- 0 388 634
- WO-A1-2004/088137
- WO-A2-2011/064019
- DE-A1- 4 132 469
- DE-A1- 10 065 234
- DE-A1- 19 643 343
- DE-A1-102005 061 543
- DE-A1-102007 022 216
- DE-A1-102007 043 592
- DE-A1-102007 054 808
- DE-A1-102008 002 345
- GB-A- 2 151 731
- US-A- 5 769 509

## Beschreibung

Die Erfindung betrifft ein Bremssystem für ein Fahrzeug, der Art, wie aus EP 0388634 A bekannt. Des Weiteren betrifft die Erfindung ein Verfahren zum Betreiben eines Bremssystems eines Fahrzeugs.

### Stand der Technik

In der EP 0 565 15 A1 ist eine als Antischlupfregelung ausgebildete Plungervorrichtung beschrieben. Mittels der Antischlupfregelung kann ein Bremsflüssigkeitsvolumen aus einer Radbremszange in ein Flüssigkeitsspeichervolumen der Antischlupfregelung eingesaugt werden, um einen Bremsdruck in der Radbremszange zu reduzieren. Ebenso kann ein Bremsflüssigkeitsvolumen aus dem Flüssigkeitsspeichervolumen der Antischlupfregelung zum Steigern des Bremsdrucks in die Radbremszange hineingedrückt werden.

### Offenbarung der Erfindung

Die Erfindung schafft ein Bremssystem für ein Fahrzeug mit den Merkmalen des Anspruchs 1 und ein Verfahren zum Betreiben eines Bremssystems eines Fahrzeugs mit den Merkmalen des Anspruchs 10.

### Vorteile der Erfindung

Die vorliegende Erfindung ermöglicht mit der als im Wesentlichen gleichmäßig fördernde Pumpeinrichtung ausgebildeten Flüssigkeitsfördereinrichtung beispielsweise eine vorteilhafte Möglichkeit zum Steigern des Bremsdrucks in mindestens einer Radbremszange unabhängig von einem Innendruck in einem Hauptbremszylinder. Es wird jedoch darauf hingewiesen, dass die Einsetzbarkeit der im Weiteren beschriebenen Erfindung nicht auf diese Verwendung beschränkt ist.

Unter einem gleichzeitigen Fördern kann auch ein Fördern ohne ein ausgeprägtes Druckmaximum pro Zyklus/Betriebsperiode der Pumpeinrichtung verstanden werden. Durch die Verwendung der als im Wesentlichen gleichmäßig fördernde Pumpeinrichtung ausgebildeten Flüssigkeitsfördereinrichtung kann verhindert werden, dass der Betrieb der Flüssigkeitsfördereinrichtung ein Vibrieren oder Zittern eines von einem Fahrer betätigten Bremsbetätigungselements, wie insbesondere eines Bremspedals, bewirkt.

Der Energieverbrauch der als im Wesentlichen gleichmäßig fördernden Pumpeinrichtung ausgebildeten Flüssigkeitsfördereinrichtung ist aufgrund eines Entfallens von Reibungsverlusten, welche beispielsweise bei einem Plunger auftreten, vergleichsweise niedrig. Die vorliegende Erfindung gewährleistet somit auch eine Reduzierung des Energieverbrauchs und der Kraftstoffemission. Außerdem benötigt eine im Wesentlichen gleichmäßig fördernde Pumpeinrichtung nicht das vergleichsweise große Übersetzungsverhältnis eines Plungers.

Bevorzugter Weise ist die Flüssigkeitsfördereinrichtung als Zahnradpumpe oder als phasenverschoben-betriebene Mehrkolbenpumpe ausgebildet. Die als Zahnradpumpe oder als phasenverschoben-betriebene Mehrkolbenpumpe ausgebildete Flüssigkeitsfördereinrichtung ist mit einem verringerten Montageaufwand montierbar, hat eine reduzierte Baugröße und ist zu niedrigeren Kosten herstellbar. Der Energieverbrauch der als Zahnradpumpe oder als phasenverschoben-betriebene Mehrkolbenpumpe ausgebildeten Flüssigkeitsfördereinrichtung ist aufgrund eines Entfallens von Reibungsverlusten relativ niedrig. Außerdem benötigt eine Zahnradpumpe oder eine phasenverschoben-betriebene Mehrkolbenpumpe nur ein vergleichsweise kleines Übersetzungsverhältnis.

In einer vorteilhaften Ausführungsform ist die mindestens eine Radbremszange über ein Verblendventil mit der Flüssigkeitsspeichereinrichtung hydraulisch derart verbunden, dass Bremsflüssigkeit über das in einen zumindest teilgeöffneten Zustand gesteuerte Verblendventil in die Flüssigkeitsspeichereinrichtung transferierbar ist. In diesem Fall ist die vorteilhafte Weiterbildung nicht nur zum Steigern eines Bremsdrucks in der mindestens einen Radbremszange ausgelegt, sondern kann auch zum Reduzieren des Bremsdrucks in der mindestens einen Radbremszange eingesetzt werden.

Die als im Wesentlichen gleichmäßig fördernde Pumpeinrichtung ausgebildete Flüssigkeitsfördereinrichtung und das Verblendventil sind kostengünstige Komponenten für eine hydraulische Rekuperiereinheit/Rekuperiereinrichtung. Gegenüber einem Plunger benötigt die aus diesen Komponenten zusammengesetzte Rekuperiereinheit kein aufwändiges Getriebe, wie beispielsweise ein Spindelgetriebe. Außerdem sind die im Wesentlichen gleichmäßig fördernde Pumpeinrichtung ausgebildete Flüssigkeitsfördereinrichtung und das Verblendventil mittels einer einfach ausführbaren und auf bekannte Verfahrensschritte reduzierten Montage an einem Bremssystem ausbildbar. Die als im Wesentlichen gleichmäßig fördernde Pumpeinrichtung ausgebildete Flüssigkeitsfördereinrichtung und das Verblendventil sind außerdem kostengünstig in einer vergleichsweise kleinen Größe herstellbar. Insbesondere können zum Herstellen der aus diesen Komponenten zusammengesetzten hydraulischen Rekuperiereinheit in Serie befindliche Baugruppen verwendet werden.

### Optionalerweise kann zwischen dem Verblendventil und der

Flüssigkeitsspeichereinrichtung ein erstes Rückschlagventil angeordnet sein. Auf diese Weise kann, sofern dies gewünscht wird, sichergestellt werden, dass trotz eines Vorliegens des Verblendventils in einem zumindest teilgeöffneten Zustand erst ab einem bestimmten Bremsdruck in der mindestens einen Radbremszange Bremsflüssigkeit in die Flüssigkeitsspeichereinrichtung transferiert wird.

Des Weiteren kann eine Förderseite der als im Wesentlichen gleichmäßig fördernde Pumpeinrichtung ausgebildeten Flüssigkeitsfördereinrichtung über ein zweites Rückschlagventil mit der mindestens einen Radbremszange hydraulisch verbunden sind. Auf diese Weise ist verlässlich verhinderbar, dass trotz eines Vorliegens des Verblendventils in einem geschlossenen Zustand über die im Wesentlichen gleichmäßig fördernde Pumpeinrichtung ausgebildete Flüssigkeitsfördereinrichtung Bremsflüssigkeit in die Speicherkammer einsickert.

Beispielsweise kann die als Zahnradpumpe ausgebildete Flüssigkeitsfördereinrichtung eine Innenzahnradpumpe sein. Dies ermöglicht eine kostengünstige und wenig Bauraum erfordernde Ausbildung der Flüssigkeitsfördereinrichtung. Anstelle einer Innenzahnradpumpe ist jedoch auch eine Außenzahnradpumpe als Flüssigkeitsfördereinrichtung einsetzbar.

In einer weiteren vorteilhaften Ausführungsform ist die Flüssigkeitsfördereinrichtung eine federlose Speicherkammer. Unter der federlosen Speicherkammer kann beispielsweise eine Speicherkammer verstanden werden, welche nicht federbelastet ist. Mittels einer Verwendung einer federlosen Speicherkammer ist der Bremsdruck in der mindestens einen Radbremszange (nahezu) auf Null reduzierbar.

Ebenso kann die Flüssigkeitsfördereinrichtung über eine Verbindungsleitung mit einem Bremsflüssigkeitsreservoir verbunden sein. Auch dies gewährleistet die vorteilhafte Reduzierbarkeit des Bremsdrucks in der mindestens einen Radbremszange auf einen Wert von (nahezu) Null. Wie unten genauer ausgeführt wird, kann aufgrund eines derart reduzierten Bremsdrucks durch Einsetzen eines Generators mindestens eine Fahrzeugbatterie vergleichsweise schnell aufgeladen werden.

Bevorzugter Weise ist die Flüssigkeitsspeichereinrichtung ein nicht-gasvorgespannter Membranspeicher. Auf diese Weise ist verhinderbar, dass bei einem Pumpen der zuvor aufgenommen Bremsflüssigkeit in die mindestens eine Radbremszange ein Unterdruck an der Saugseite der Flüssigkeitsfördereinrichtung entsteht, welcher einen Speicherkammerkolben bis zu Endanschlag vorzieht.

Die in den oberen Absätzen beschriebenen Vorteile sind auch bei einem entsprechenden Verfahren zum Betreiben eines Bremssystems eines Fahrzeugs gewährleistet.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Bremssystems;
- Fig. 2: eine schematische Darstellung einer zweiten Ausführungsform des Bremssystems;
- Fig. 3: ein Flussdiagramm zum Darstellen einer ersten Ausführungsform des Verfahrens zum Betreiben eines Bremssystems eines Fahrzeugs; und
- Fig. 4a bis 4c: drei Koordinatensysteme zum Erläutern einer zweiten Ausführungsform des Verfahrens zum Betreiben eines Bremssystems eines Fahrzeugs.

### Ausführungsformen der Erfindung

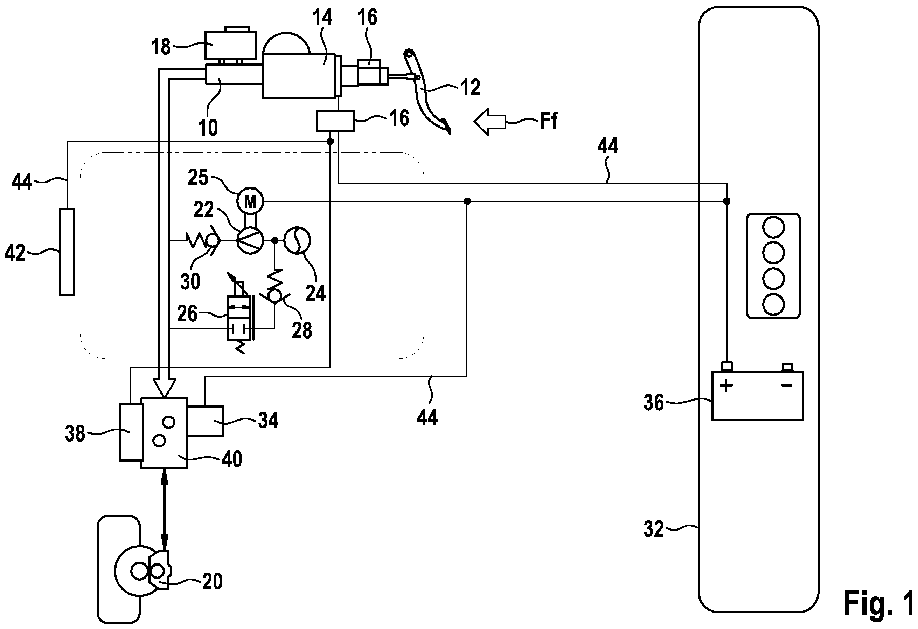

Fig. 1 zeigt eine schematische Darstellung einer ersten Ausführungsform des Bremssystems.

Das in Fig. 1 schematisch wiedergegebene Bremssystem umfasst einen Hauptbremszylinder 10, welcher beispielsweise als Tandem-Hauptbremszylinder ausgebildet ist. Das im Weiteren beschriebene Bremssystem für ein Fahrzeug ist jedoch nicht auf die Ausstattung mit einem als Tandem-Hauptbremszylinder ausgebildeten Hauptbremszylinder 10 beschränkt.

Bevorzugter Weise ist ein Bremsbetätigungselement 12 derart an dem Hauptbremszylinder 10 angeordnet, dass ein Fahrer eines mit dem Bremssystem ausgestatteten Fahrzeugs mittels einer auf das Bremsbetätigungselement 12 aufgebrachten Fahrerbremskraft Ff mindestens einen verstellbaren Kolben des Hauptbremszylinders 10, wie beispielsweise einen Stangenkolben und/oder einen Schwimmkolben, zumindest teilweise in diesen hineinverstellen kann. Das Bremsbetätigungselement 12 kann insbesondere als Bremspedal ausgebildet sein. Das im Weiteren beschriebene Bremssystem ist jedoch nicht auf eine Ausstattung mit einem als Bremspedal ausgebildeten Bremsbetätigungselement 12 oder auf eine Ausstattung mit dem Bremsbetätigungselement 12 limitiert.

Optionalerweise weist das Bremssystem auch einen Bremskraftverstärker 14 auf, welcher dazu ausgelegt ist, bei einer Betätigung des Bremsbetätigungselements 12 eine (zur Fahrerbremskraft Ff) zusätzliche Unterstützungskraft auf den mindestens einen verstellbaren Kolben des Hauptbremszylinders 10 auszuüben. Auf diese Weise kann der Fahrer bei einem Abbremsen des Fahrzeugs kraftmäßig entlastet werden. Der Bremskraftverstärker 14 kann beispielsweise ein hydraulischer Bremskraftverstärker und/oder ein elektromechanischer Bremskraftverstärker sein. Vorteilhafterweise ist der Bremskraftverstärker 14 als stetig regelbarer/steuerbarer Bremskraftverstärker ausgebildet. Die Ausbildbarkeit des Bremskraftverstärkers 14 ist jedoch nicht auf die hier aufgezählten Beispiele beschränkt.

Das Bremssystem kann auch mindestens einen Sensor 16 umfassen, welcher dazu ausgelegt ist, eine Betätigungsstärke der Betätigung des Bremsbetätigungselements 12 durch den Fahrer zu ermitteln und ein entsprechendes Sensorsignal auszugeben. Der mindestens eine Sensor 16 kann beispielsweise dazu ausgelegt sein, die Fahrerbremskraft Ff, einen Verstellweg des Bremsbetätigungselements 12 und/oder einen Bremsdruck zu ermitteln. Der mindestens eine Sensor 16 kann insbesondere ein Stangenwegsensor oder ein Bremsdrucksensor sein. Die Ausbildbarkeit des mindestens einen Sensors 16 ist jedoch nicht auf die hier beschriebenen Beispiele limitiert.

An dem Hauptbremszylinder 10 kann auch ein Bremsflüssigkeitsreservoir 18 (Vorratsbehälter) angeordnet sein. Das Bremsflüssigkeitsreservoir 18 kann insbesondere über mindestens eine Flüssigkeitsaustauschöffnung, wie beispielsweise eine Schnüffelbohrung, mit dem Hauptbremszylinder 10 (hydraulisch) verbunden sein. Bevorzugter Weise ist das Bremsflüssigkeitsreservoir 18 so ausgebildet, dass in dem Bremsflüssigkeitsreservoir 18 der Atmosphärendruck unabhängig von einem Innendruck in dem Hauptbremszylinder 10 (konstant) vorliegt.

Der Hauptbremszylinder 10 ist mit mindestens einer Radbremszange 20 hydraulisch verbunden. Unter einem hydraulischen Verbundensein kann verstanden werden, dass ein Bremsflüssigkeitstransfer zwischen den zwei miteinander hydraulisch verbundenen Komponenten (zumindest bei einem Vorliegen mindestens eines möglicherweise dazwischen angeordneten Ventils in einem bestimmten Zustand) gewährleistet ist. Unter einer hydraulischen Verbindung des Hauptbremszylinders 10 mit der mindestens einen Radbremszange 20 kann insbesondere verstanden werden, dass der Fahrer mittels eines zumindest teilweisen Hineinverstellen des mindestens einen verstellbaren Kolbens in den Hauptbremszylinder 10 Bremsflüssigkeit aus dem Hauptbremszylinder 10 in die mindestens eine Radbremszange transferieren kann. Somit kann der Fahrer über eine Betätigung des Bremsbetätigungselements 12 einen Bremsdruck in der mindestens einen Radbremszange 20 zum Ausüben eines hydraulischen Bremsmoments auf das mindestens eine zugeordnete Rad aufbauen.

Das Bremssystem kann insbesondere vier Radbremszangen 20 haben, welche jeweils einem Rad des Fahrzeugs zugeordnet sind. Es wird jedoch darauf hingewiesen, dass das hier beschriebene Bremssystem nicht auf eine Ausstattung mit einer bestimmten Anzahl von Radbremszangen limitiert ist. Das Bremssystem kann somit auch zum Abbremsen eines Fahrzeugs mit mehr als vier Rädern ausgebildet sein.

Das Bremssystem weist auch eine Flüssigkeitsfördereinrichtung auf, mittels welcher Bremsflüssigkeit in die mindestens eine Radbremszange 20 transferierbar ist. Die Flüssigkeitsfördereinrichtung 22 ist als im Wesentlichen gleichmäßig fördernde Pumpeinrichtung ausgebildet, mittels welcher Bremsflüssigkeit aus einer Flüssigkeitsspeichereinrichtung 24 in die mindestens eine Radbremszange 20 pumpbar ist. Unter einer fördernden Pumpeinrichtung kann insbesondere eine Zahnradpumpe und eine phasenverschoben-betriebene Mehrkolbenpumpe verstanden werden. Insbesondere kann die Flüssigkeitsfördereinrichtung 22 eine Innenzahnradpumpe sein. Ebenso kann die als phasenverschoben-betriebene Mehrkolbenpumpe eine aus mehreren Kolbenpumpeneinheiten ausgebildete Pumpeinrichtung sein, wobei die Ansaugseiten der mehreren Kolbenpumpeneinheiten an einen gemeinsamen Zufuhrleitungsabschnitt und die Förderseiten der mehreren Kolbenpumpeneinheiten an einen gemeinsamen Abflussleitungsabschnitt angeordnet sind, und eine Steuerung der Pumpeinrichtung die mehreren Kolbenpumpeneinheiten so ansteuert, dass die Phasen der Kolbenpumpeneinheiten bei einem Betrieb der Pumpeinrichtung unterschiedlich sind. Eine derartige phasenverschoben-betriebene Mehrkolbenpumpe weist kein ausgeprägtes Druckmaximum pro Zyklus/Betriebsperiode des geförderten Stroms auf, sondern höchstens mehrere leicht ausgebildete und nicht/kaum wahrnehmbare "Druckmaxima", die jedoch das (im Wesentlichen) gleichmäßige Fördern nicht stören.

Die Flüssigkeitsfördereinrichtung 22 ist an ihrer Ansaugseite mit der Flüssigkeitsspeichereinrichtung 24 hydraulisch verbunden. Ebenso ist die Flüssigkeitsfördereinrichtung 22 an ihrer Förderseite mit der mindestens einen Radbremszange 20 hydraulisch derart verbunden, dass mittels der Flüssigkeitsfördereinrichtung 22 Bremsflüssigkeit aus der Flüssigkeitsspeichereinrichtung 24 in die mindestens eine Radbremszange 20 pumpbar ist. Dies ist auch bewirkbar, sofern zwischen der Flüssigkeitsfördereinrichtung 22 und der mindestens einen Radbremszange 20 noch mindestens ein (nicht skizziertes) Ventil angeordnet ist.

Somit kann mittels der Flüssigkeitsfördereinrichtung 22 zusätzlich zu der aus dem Hauptbremszylinder 10 transferierten Bremsflüssigkeit weitere Bremsflüssigkeit in die mindestens eine Radbremszange 20 gepumpt werden. Durch das Ausstatten des Bremssystems mit der Flüssigkeitsfördereinrichtung 22 kann der Bremsdruck in der mindestens einen Radbremszange deshalb über den mittels der Fahrerbremskraft Ff aufgebauten Bremsdruck gesteigert werden. Dies kann beispielsweise für ein schnelleres Abbremsen des Fahrzeugs genutzt werden. Auf eine weitere Einsetzmöglichkeit der Flüssigkeitsfördereinrichtung 22 zum Verblenden eines Generator-Bremsmoments wird unten noch genauer eingegangen.

Durch die Ausbildung der Flüssigkeitsfördereinrichtung 22 als im Wesentlichen gleichmäßig fördernde Pumpeinrichtung (Zahnradpumpe oder phasenverschoben-betriebene Mehrkolbenpumpen) können Pulsationen beim Transferieren von Bremsflüssigkeit aus der Flüssigkeitsspeichereinrichtung 24 in die mindestens eine Radbremszange 20 niedrig/klein gehalten werden. Auf diese Weise ist verhinderbar, dass der Fahrer bei einem Betätigen des Bremsbetätigungselements 12 ein durch große Pulsationen bewirktes Vibrieren oder Zittern des Bremsbetätigungselements 12 spürt. Durch die Reduzierung/Verhinderung der Pulsationen bei dem Transferieren der Bremsflüssigkeit aus der Flüssigkeitsspeichereinrichtung 24 in die mindestens eine Radbremszange 20 mittels der als im Wesentlichen gleichmäßig fördernde Pumpeinrichtung (Zahnradpumpe oder phasenverschoben-betriebene Mehrkolbenpumpe) ausgebildeten Flüssigkeitsfördereinrichtung 22 ist ein angenehmes Bremsbetätigungsgefühl für den Fahrer realisierbar.

Außerdem ermöglicht das Einsetzen der als Zahnradpumpe oder als phasenverschoben-betriebene Mehrkolbenpumpe ausgebildeten Flüssigkeitsfördereinrichtung 22 eine deutliche Reduzierung von Ungleichförmigkeiten des Moments, wodurch Körperschall reduzierbar ist. Des Weiteren weisen die Flüssigkeitsfördereinrichtung 22 und die Flüssigkeitsspeichereinrichtung 24 eine gegenüber einem Plunger deutlich reduzierte Baugröße auf. Die als Zahnradpumpe oder als phasenverschoben-betriebene Mehrkolbenpumpe ausgebildete Flüssigkeitsfördereinrichtung 22 ist außerdem ohne einen Reibungsverlust betreibbar, was ein weiterer Vorteil gegenüber einem Plunger ist. Durch das Einsetzen der als Zahnradpumpe oder als phasenverschoben-betriebene Mehrkolbenpumpe ausgebildeten Flüssigkeitsfördereinrichtung 22 anstelle eines Plungers können somit ein Energieverbrauch und eine Schadstoffemission des mit dem Bremssystem ausgestatteten Fahrzeugs reduziert werden. Außerdem benötigt eine als Zahnradpumpe oder als phasenverschoben-betriebene Mehrkolbenpumpe ausgebildete Flüssigkeitsfördereinrichtung 22 kein aufwändiges Getriebe, wodurch sie in der Regel kostengünstiger als ein Plunger herstellbar ist.

Die als Zahnradpumpe oder als phasenverschoben-betriebene Mehrkolbenpumpe ausgebildete Flüssigkeitsfördereinrichtung 22 kann mittels eines kostengünstigen Pumpmotors 25 betrieben werden. Ebenso kann für die Flüssigkeitsfördereinrichtung 22 ein wenig Bauraum beanspruchender Pumpmotor 25 eingesetzt werden.

Die Flüssigkeitsspeichereinrichtung 24 kann eine Speicherkammer, insbesondere eine federlose Speicherkammer sein. Durch eine federlose Ausbildung der Speicherkammer kann eine zusätzliche Rückstellfeder am Speicherkolben entfallen. Die Ausbildung der Flüssigkeitsspeichereinrichtung 24 als federloser/nicht-federbelasteter Speicher (federunbelasteter Speicher) ist außerdem mit einem weiteren Vorteil verbunden: Bei einer federbelasteten Ausbildung der Flüssigkeitsspeichereinrichtung 24 kann je nach Kolbenstellung und Federvorspannung der Innendruck in der Flüssigkeitsspeichereinrichtung 24 einen von Null deutlich beabstandeten Wert betragen. Aufgrund dieses Innendrucks ungleich Null in der Flüssigkeitsspeichereinrichtung 24 ist in diesem Fall der Bremsdruck in der mindestens einen Radbremszange nur bis zu diesem entsprechenden Wert ablassbar/reduzierbar. Eine Ausbildung der Flüssigkeitsspeichereinrichtung 24 als nicht-federbelasteter Speicher ist somit mit dem Vorteil verbunden, dass der Druck in der mindestens einen Radbremszange 20 (nahezu) auf Null reduzierbar ist. Die federlose Ausbildung der Speicherkammer erlaubt somit eine Reduzierung des Bremsdrucks in der mindestens einen Radbremszange 20 auf einen Wert von (nahezu) Null.

Auf eine weitere besonders vorteilhafte Ausbildung der Flüssigkeitsspeichereinrichtung 24 wird unten noch genauer eingegangen. Die Flüssigkeitsspeichereinrichtung 24 kann z.B. für ein Speichervolumen zwischen 2 bis 5 cm³, insbesondere zwischen 3 bis 3,5 cm³, ausgelegt sein. Für die Flüssigkeitsspeichereinrichtung 24 kann somit auch eine platzsparende Komponente verwendet werden.

In einer bevorzugten Ausführungsform ist die mindestens eine Radbremszange 20 über ein Verblendventil 26 mit der Flüssigkeitsspeichereinrichtung 24 hydraulisch derart verbunden, dass Bremsflüssigkeit über das in einem zumindest teilgeöffneten Zustand gesteuerte Verblendventil 26 in die Flüssigkeitsspeichereinrichtung 24 transferierbar ist. Auf diese Weise kann der Bremsdruck in der mindestens einen Radbremszange 20 reduziert werden. Bevorzugter Weise ist das Verblendventil 26 als stromlos geschlossenes Ventil ausgebildet. Da ein Bestromen des Verblendventils 26 in diesem Fall nur zum Steuern des Verblendventils 26 in den zumindest teilgeöffneten Zustand notwendig ist, ist durch die stromlos geschlossene Ausbildung des Verblendventils 26 Energie einsparbar.

Es wird darauf hingewiesen, dass unter dem Verblendventil 26 kein Radauslassventil zu verstehen ist. Stattdessen kann der mindestens eine Bremskreis des Bremssystems jeweils ein Radauslassventil pro Radbremszange und zusätzlich noch das Verblendventil 26 umfassen.

### Optionalerweise kann zwischen dem Verblendventil 26 und der

Flüssigkeitsspeichereinrichtung 24 ein erstes Rückschlagventil 28 angeordnet sein. Das erste Rückschlagventil 28 kann beispielsweise für einen ersten Öffnungsdruck ausgebildet sein, welcher vergleichsweise niedrig ist. Der erste Öffnungsdruck kann beispielsweise unter 1 bar, vorteilhafter Weise unter 0,5 bar, insbesondere bei 0,1 bar, liegen. Es wird jedoch darauf hingewiesen, dass die Ausbildbarkeit des Bremssystems nicht auf eine Ausstattung mit dem ersten Rückschlagventil 28 oder auf dessen Auslegung für einen bestimmten ersten Öffnungsdruck limitiert ist.

Die Förderseite der als im Wesentlichen gleichmäßig fördernde Pumpeinrichtung ausgebildeten Flüssigkeitsfördereinrichtung 22 kann über ein zweites Rückschlagventil 30 mit der mindestens einen Radbremszange 20 und/oder dem Hauptbremszylinder 10 verbunden sein. Über eine Ausstattung des Bremssystems mit dem zweiten Rückschlagventil 30 ist insbesondere bei einem geschlossenen Verblendventil 26 ein unerwünschtes Durchsickern von Bremsflüssigkeit durch die Flüssigkeitsfördereinrichtung 22 in die Flüssigkeitsspeichereinrichtung 24 verlässlich verhinderbar. Das zweite Rückschlagventil 30 kann insbesondere für einen zweiten Öffnungsdruck ausgelegt sein, welcher größer als der erste Öffnungsdruck ist. Der zweite Öffnungsdruck kann beispielsweise über 3 bar, vorzugsweise über 5 bar, insbesondere bei 6 bar, liegen. Das zweite Rückschlagventil 30 ist bevorzugter Weise so ausgelegt, dass das zweite Rückschlagventil erst ab einem Vorliegen des zweiten Öffnungsdrucks an der Flüssigkeitsfördereinrichtung 22 öffnet. Das Bremssystem ist jedoch nicht auf die Verwendung des zweiten Rückschlagventils 30 mit einem bestimmten Öffnungsdruck festgelegt. Für die Rückschlagventile 28 und 30 können bereits bei ESP-Systemen eingesetzte Rückschlagventile verwendet werden.

Durch die vorteilhafte Ausstattung des Bremssystems mit den Komponenten 22, 24 und 26 kann der Bremsdruck in der mindestens einen Radbremszange 20 wahlweise konstant gehalten, reduziert oder gesteigert werden. Die Komponenten 22, 24 und 26 realisieren somit eine Verblendvorrichtung, mittels welcher das hydraulische Bremsmoment der mindestens einen Radbremszange 20 an ein nicht-hydraulisches Zusatz-Bremsmoment, wie beispielsweise an ein Generator-Bremsmoment, anpassbar ist. Wie unten genauer ausgeführt ist, eignen sich die Komponenten 22, 24 und 26 besonders zum Verblenden eines zeitlich variierenden Generator-Bremsmoments. Es wird jedoch darauf hingewiesen, dass die Einsetzbarkeit der Komponenten 22, 24 und 26 nicht auf ein Verblenden eines Generator-Bremsmoments limitiert ist.

Das Bremssystem kann insbesondere in einem Fahrzeug vorteilhaft eingesetzt werden, welches zusätzlich zu einer Brennkraftmaschine 32 noch einen (nicht dargestellten) Generator zum Aufladen einer Fahrzeugbatterie 36 aufweist. Die Einsetzbarkeit des Bremssystems ist jedoch nicht auf ein mit dem Generator ausgestattetes Fahrzeug beschränkt.

Das Bremssystem ist mit einer ESP-Vorrichtung 38 ausgestattet, welche dazu ausgelegt ist, die (nicht dargestellten) Hochdruckschaltventile, Umschaltventile, Radeinlassventile und/oder Radauslassventile des mindestens einen Bremskreises anzusteuern. Ebenso kann das Bremssystem für ein Ausführen einer ABS-Funktion ausgelegt sein. Die ESP-Vorrichtung 38 umfasst einen Motor 34 und eine Hydraulik-Einheit 40. Da die Ausführbarkeit des Bremssystems jedoch nicht auf einen bestimmten Typ der ESP-Vorrichtung 38 oder des mindestens einen Bremskreises limitiert ist, wird hier nicht genauer darauf eingegangen.

In einer vorteilhaften Weiterbildung weist das Bremssystem eine Steuereinrichtung 42 auf, welche dazu ausgelegt ist, die Flüssigkeitsfördereinrichtung 22 und/oder das Verblendventil 26 zum Verblenden eines zeitlich variierenden nicht-hydraulischen Zusatz-Bremsmoments, wie beispielsweise des Generator-Bremsmoments des Generators, anzusteuern. Die Steuervorrichtung 42 kann über Leitungen 44 mit dem mindestens einen Sensor 16, dem Pumpmotor 25, dem Verblendventil 26, dem Generator, der Fahrzeugbatterie 36 und/der der ESP-Vorrichtung 38 verbunden sein. Außerdem kann die Steuervorrichtung 42 insbesondere die unten genauer angegebenen Verfahrensschritte ausführen. Bezüglich der Auslegung der Steuervorrichtung 42 und der damit ausführbaren Verfahrensschritte wird deshalb auf die nachfolgenden Figuren verwiesen.

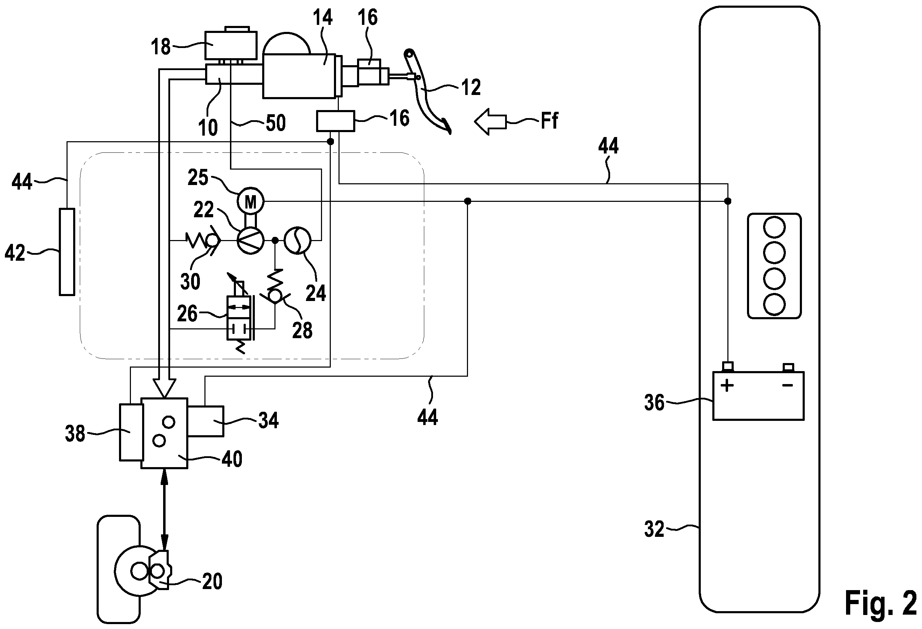

Fig. 2 zeigt eine schematische Darstellung einer zweiten Ausführungsform des Bremssystems.

Das in Fig. 2 schematisch dargestellte Bremssystem weist die oben schon beschriebenen Komponenten auf. Auf eine erneute Beschreibung dieser Komponenten wird deshalb verzichtet.

Als Ergänzung ist bei dem Bremssystem der Fig. 2 die Flüssigkeitsspeichereinrichtung 24 über eine Verbindungsleitung 50 mit dem Bremsflüssigkeitsreservoir 18 verbunden. Vorzugsweise ist die als Speicherkammer ausgebildete Flüssigkeitsspeichereinrichtung 24 von ihrer Rückseite her mit dem Bremsflüssigkeitsreservoir 18 verbunden. Durch die vorteilhafte Anbindung der Flüssigkeitsspeichereinrichtung 24 an das Bremsflüssigkeitsreservoir 18 wird bei einer Aufnahme von Bremsflüssigkeit (aus der mindestens einen Radbremszange) über ein Verschieben des Speicherkolbens der Flüssigkeitsspeichereinrichtung 24 Bremsflüssigkeit von der Rückseite des Speicherkolbens in das Bremsflüssigkeitsreservoir 18 gedrückt. Die dem Bremsflüssigkeitsreservoir 18 verbundene Flüssigkeitsspeichereinrichtung 24 ist darum gegendruckfrei ausbildbar.

Aufgrund der vorteilhaften Anbindung der Flüssigkeitsspeichereinrichtung 24 an das Bremsflüssigkeitsreservoir 18 wird die Dichtung im Speicherkolben außerdem von beiden Seiten mit Bremsflüssigkeit beaufschlagt. Die Dichtung kann somit eine sehr geringe Reibung aufweisen. Die Kosten für die Dichtung der Flüssigkeitsspeichereinrichtung 24, welche beispielsweise aus PTFE ausgebildet sein kann, können somit reduziert werden. Auch die Anbindung der Flüssigkeitsspeichereinrichtung 24 an das Bremsflüssigkeitsreservoir 18 ermöglicht eine Reduzierung des Bremsdrucks in der mindestens einen Radbremszange 20 auf einen Wert von (nahezu) Null.

In einer bevorzugten Ausführungsform ist die Flüssigkeitsspeichereinrichtung 24 ein nicht-gasvorgespannter Membranspeicher. Auf diese Weise ist verhinderbar, dass bei einem Pumpen der zuvor aufgenommenen Bremsflüssigkeit in den mindestens einen Radbremszylinder 20 mittels der Flüssigkeitsfördereinrichtung 22 ein Unterdruck an der Saugseite der Flüssigkeitsfördereinrichtung 22 entsteht und somit ein Vorziehen des Speicherkolbens/Speicherkammerkolbens bis zum Endanschlag stattfindet. Der Einsatz der Membran ist somit eine vorteilhafte Möglichkeit zum Reduzieren/Vermeiden eines Vorspanndrucks in der an das Bremsflüssigkeitsreservoir 18 angebundenen Flüssigkeitsspeichereinrichtung 24. Die Membran ist vorzugsweise so ausgelegt, dass sie sich bei höheren Drücken an dem Gehäuse der Speicherkammer anlegt, ohne dabei beschädigt/zerstört zu werden. Es wird darauf hingewiesen, dass die Ausbildung der Speicherkammer als Membranspeicher auch ohne die rückseitige Verbindung zu dem Bremsflüssigkeitsreservoir 18 vorteilhaft ist, da auf diese Weise eine Schmierung zur Reibungsreduzierung der bewegten Dichtung nicht mehr notwendig ist.

Es wird jedoch darauf hingewiesen, dass das Bremssystem nicht auf eine als nichtgasvorgespannte Membranspeicher ausgebildete Flüssigkeitsspeichereinrichtung 24 beschränkt ist. Als Alternative zu einer derartigen Ausbildung der Flüssigkeitsspeichereinrichtung 24 kann die Reibung der Dichtung beim Ansaugen des Speicherkolbens auch reduziert werden, indem alternativ zur Unterstützung der Kolbenbewegung eine schwächere Feder eingebaut wird, welche beispielsweise einen maximalen Druck von etwa 1 bar zulässt. Dies erlaubt ein verlässliches Wiederauffüllen des Volumens auf der Rückseite des Speicherkolbens aus dem Bremsflüssigkeitsreservoir 18. Die beidseitige Beaufschlagung der Dichtung mit Flüssigkeit bewirkt eine sehr geringe Reibung.

Es wird darauf hingewiesen, dass bei den oben ausgeführten Ausführungsbeispielen eine Leckage an der Dichtung der Flüssigkeitsspeichereinrichtung 24 ausgeschlossen ist.

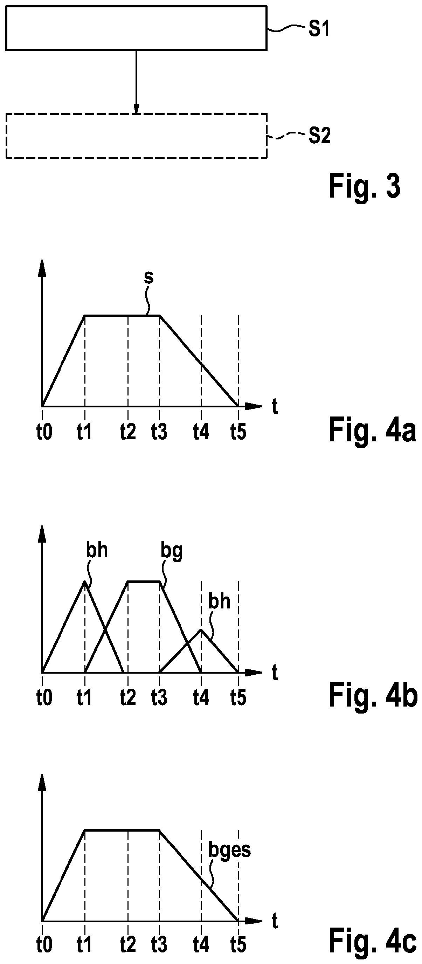

Fig. 3 zeigt ein Flussdiagramm zum Darstellen einer ersten Ausführungsform des Verfahrens zum Betreiben eines Bremssystems eines Fahrzeugs.

Das nachfolgend beschriebene Verfahren ist beispielsweise mittels eines der oben ausgeführten Bremssysteme ausführbar. Die Ausführbarkeit des Verfahrens ist jedoch nicht auf die Verwendung dieser Bremssysteme beschränkt.

In einem Verfahrensschritt S1 wird ein Bremsdruck in mindestens einer mit einem Hauptbremszylinder hydraulisch verbundenen Radbremszange durch Transferieren von Bremsflüssigkeit in die mindestens eine Radbremszange mittels einer Fördereinrichtung gesteigert. Dies geschieht durch Pumpen von Bremsflüssigkeit aus einer Flüssigkeitsspeichereinrichtung in die mindestens eine Radbremszange mittels einer im Wesentlichen gleichmäßig fördernden Pumpeinrichtung (als Flüssigkeitsfördereinrichtung). Bevorzugter Weise wird Bremsflüssigkeit mittels einer Zahnradpumpe oder einer phasenverschobenen-betriebenen Mehrkolbenpumpe in die mindestens eine Radbremszange gepumpt.

Durch das Ausführen des Verfahrensschritts S1 kann der Bremsdruck in der mindestens einen Radbremszange unabhängig von einem Innendruck in dem Hauptbremszylinder gesteigert werden. Auf diese Weise kann somit auch unabhängig von einer Betätigung eines Bremsbetätigungselements durch einen Fahrer der Bremsdruck gesteigert werden.

Optionalerweise umfasst das Verfahren auch einen Verfahrensschritt S2, in welchem der Bremsdruck in der mindestens einen Radbremszange reduziert wird durch Steuern eines Verblendventils, über welches die mindestens eine Radbremszange mit der Flüssigkeitsspeichereinrichtung hydraulisch verbunden ist. Dabei wird das Verblendventil in einen zumindest teilgeöffneten Zustand gesteuert. Dies bewirkt, dass Bremsflüssigkeit über das in den zumindest teilgeöffneten Zustand gesteuerte Verblendventil in die Flüssigkeitsspeichereinrichtung transferiert wird.

Mittels des Verfahrensschritts S2 kann der Bremsdruck in der mindestens einen Radbremszange unabhängig von dem Innendruck in dem Hauptbremszylinder reduziert werden. Insbesondere kann somit trotz einer zunehmenden Fahrerbremskraft, welche auf das Bremsbetätigungselement ausgeübt wird, der Bremsdruck in der mindestens einen Radbremszange konstant gehalten oder reduziert werden.

Die Verfahrensschritte S1 und S2 können insbesondere dazu verwendet werden, den Bremsdruck in der mindestens einen Radbremszange an ein zeitlich variierendes nicht-hydraulisches Zusatz-Bremsmoment, wie insbesondere an ein zeitlich variierendes Generator-Bremsmoment eines Generators, anzupassen. Der Verfahrensschritt S1 wird vorzugsweise bei einer zeitlichen Abnahme des Generator-Bremsmoments ausgeführt. Demgegenüber ist mittels des Verfahrensschritts S2 eine zeitliche Zunahme des Generator-Bremsmoments zumindest teilweise kompensierbar. Mittels der Verfahrensschritte S1 und S2 ist insbesondere ein Verblenden des zeitlich variierenden Generator-Bremsmoments so möglich, dass trotz der zeitlichen Änderungen des Generator-Bremsmoments eine von dem Fahrer mittels der Betätigung des Bremsbetätigungselements vorgegebene Soll-Fahrzeugverzögerung verlässlich eingehalten wird.

Die Bezeichnung der Verfahrensschritte S1 und S2 legt keine zeitliche Reihenfolge zum Ausführen von diesen fest. Stattdessen können die Verfahrensschritte S1 und S2 in unterschiedlicher zeitlicher Reihenfolge ausgeführt und beliebig oft wiederholt werden.

Fig. 4a bis 4c zeigen drei Koordinatensysteme zum Erläutern einer zweiten Ausführungsform des Verfahrens zum Betreiben eines Bremssystems eines Fahrzeugs.

Die Abszissen der Koordinatensysteme der Fig. 4a bis 4c sind die Zeitachse t. Die Ordinate der Fig. 4a ist ein Pedalweg s. Die Ordinate der Fig. 4b gibt ein hydraulisches Bremsmoment bh der mindestens einen Radbremszange und ein Generator-Bremsmoment bg eines Generators wieder. Die auf das Fahrzeug insgesamt ausgeübte Gesamt-Verzögerung bges (Summe aus dem hydraulischen Bremsmoment bh und dem Generator-Bremsmoment bg) ist mittels der Ordinate der Fig. 4c angezeigt.

Beispielhaft wird bei dem nachfolgend beschriebenen Verfahren eines der oben ausgeführten Bremssysteme verwendet. Die Ausführbarkeit des hier beschriebenen Verfahrens ist jedoch nicht auf die Verwendung dieser Bremssysteme limitiert.

Sofern der Fahrer das Bremsbetätigungselement nicht betätigt, sind der Pedalweg s, das hydraulische Bremsmoment bh, das Generator-Bremsmoment bg und die Gesamt-Verzögerung bges gleich Null. Ab dem Zeitpunkt t0 hat der Fahrer einen Bremswunsch und betätigt deshalb das Bremsbetätigungselement. Dabei wird Bremsflüssigkeit aus dem Hauptbremszylinder herausgedrückt. Da das Verblendventil in seinem geschlossenen Zustand vorliegt, wird lediglich in die mindestens eine Radbremszange Bremsflüssigkeit verschoben, sodass sich darin ein Bremsdruck aufbaut. Dies bewirkt eine Zunahme des hydraulischen Bremsmoments bh entsprechend der Zunahme des Pedalwegs s. Solange der Generator nicht aktiviert wird, bleibt das Generator-Bremsmoment bg gleich Null und die Gesamt-Verzögerung bges entspricht dem hydraulischen Bremsmoment bh.

Ab der Zeit t1 wird das Verblendventil in einen zumindest teilgeöffneten Zustand gesteuert. Das Steuern des Verblendventils in den zumindest teilgeöffneten Zustand bewirkt ein Verschieben von Bremsflüssigkeit aus der mindestens einen Radbremszange über das zumindest teilgeöffnete Verblendventil, ggf. über das erste Rückschlagventil, in die Flüssigkeitsspeichereinrichtung. (Das erste Rückschlagventil unterbindet dies nicht, sofern der erste Öffnungsdruck des ersten Rückschlagventils kleiner als der in der mindestens einen Radbremszange vorliegende Bremsdruck ist.) Auf diese Weise ist der Bremsdruck in der mindestens einen Radbremszange reduzierbar und das hydraulische Bremsmoment bh nimmt ab der Zeit t1 deshalb ab.

Ab der Zeit t1 kann der Generator so aktiviert werden, dass das Generator-Bremsmoment bg entsprechend der zeitlichen Abnahme des hydraulischen Bremsmoments bh zunimmt. Auf diese Weise kann die Gesamt-Verzögerung bges trotz einer zeitlichen Zunahme des Generator-Bremsmoment bg dem Pedalweg s entsprechen. Ab dem Zeitpunkt t2 kann Generator-Bremsmoment bg gleich der Gesamt-Verzögerung bges sein. Durch das gesteigerte Generator-Bremsmoment bg ist die Fahrzeugbatterie schnell aufladbar.

Wie anhand der Fig. 4a bis 4c zu erkennen ist, ist selbst bei einem konstanten Pedalweg s ungleich Null der Bremsdruck in der mindestens einen Radbremszange (nahezu) auf Null reduzierbar. Entsprechend ist auch das hydraulische Bremsmoment bh der mindestens einen Radbremszange auf Null reduzierbar. Somit kann die von dem Fahrer mittels des Pedalwegs s vorgegebenen Soll-Abbremsung des Fahrzeugs ausschließlich durch das Generator-Bremsmoment bg ausgeführt werden. Dies gewährleistet ein schnelles Aufladen der mittels des Generators aufladbaren Fahrzeugbatterie.

Ab dem Zeitpunkt t3 reduziert der Fahrer die auf das Bremsbetätigungselement ausgeübte Fahrerbremskraft. Beispielsweise nimmt der Fahrer den Fuß vom Pedal. Der Generator wird deshalb ab dem Zeitpunkt t3 so angesteuert, dass das Generator-Bremsmoment bg ab dem Zeitpunkt t3 abnimmt. Die Abnahme des Generator-Bremsmoments bg kann auch schneller als die von dem Fahrer vorgegebene Abnahme der Soll-Abbremsung des Fahrzeugs sein. Um dennoch zu gewährleisten, dass die Gesamt-Verzögerung bges dem Pedalweg s entspricht, kann ab dem Zeitpunkt t3 ein hydraulischen Bremsmoment bh ungleich Null mittels der mindestens einen Radbremszange aufgebracht werden. Dies ist ausführbar, indem mittels der als im Wesentlichen gleichmäßig fördernden Pumpeinrichtung (Zahnradpumpe oder phasenverschoben-betriebene Mehrkolbenpumpe) ausgeführten Flüssigkeitsfördereinrichtung Bremsflüssigkeit aus der Flüssigkeitsspeichereinrichtung in die mindestens einen Radbremszange gepumpt und somit ein Bremsdruck ungleich Null darin aufgebaut wird. Dies kann insbesondere so erfolgen, dass die Summe des hydraulischen Bremsmoments bh und des Generator-Bremsmoments bg einer dem Pedalweg s entsprechenden Gesamt-Verzögerung bges ergibt.

Es wird darauf hingewiesen, dass durch das Pumpen der Bremsflüssigkeit aus der Flüssigkeitsspeichereinrichtung in die mindestens eine Radbremszange mittels der im Wesentlichen gleichmäßig fördernden Pumpeinrichtung (Zahnradpumpe oder phasenverschobenen-betriebenen Mehrkolbenpumpe) auch bei einem konstant bleibenden oder zunehmenden Pedalweg s eine zeitliche Abnahme des Generator-Bremsmoments bg kompensierbar ist. Auf diese Weise kann beispielsweise eine entfallende Einsetzbarkeit des Generators aufgrund einer vollständig aufgeladenen Fahrzeugbatterie oder einer Verzögerung des Fahrzeugs unter eine für das Einsetzen des Generators geeignete Geschwindigkeit kompensiert werden.

Ab dem Zeitpunkt t4 ist das Generator-Bremsmoment bg auf Null reduziert. Die Gesamt-Verzögerung bges des Fahrzeugs wird somit ab dem Zeitpunkt t4 ausschließlich durch das hydraulische Bremsmoment bh der mindestens einen Radbremszange aufgebracht. Das hydraulische Bremsmoment bh passt sich nach einem Schließen des Verblendventils automatisch an den abnehmenden Pedalweg s an. Auf diese Weise ist gewährleistet, dass zum Zeitpunkt t5, wenn der Pedalweg s wieder gleich Null ist, auch das hydraulische Bremsmoment bh und die Gesamt-Verzögerung bges gleich Null sind.

## Patentansprüche

1. Bremssystem für ein Fahrzeug mit:
einem Hauptbremszylinder (10), welcher mit mindestens einer Radbremszange (20) hydraulisch verbunden ist; und
einer ESP-Vorrichtung (38), welche eine Hydraulik-Einheit (40) und einen Motor (34) umfasst;
**gekennzeichnet durch**
eine zusätzliche Flüssigkeitsfördereinrichtung, mittels welcher Bremsflüssigkeit in die mindestens eine Radbremszange (20) transferierbar ist;
wobei die Flüssigkeitsfördereinrichtung (22) als im Wesentlichen gleichmäßig fördernde Pumpeinrichtung ausgebildet ist, mittels welcher Bremsflüssigkeit aus einer Flüssigkeitsspeichereinrichtung (24) in die mindestens eine Radbremszange (20) pumpbar ist.

2. Bremssystem nach Anspruch 1, wobei die Flüssigkeitsfördereinrichtung (22) als Zahnradpumpe oder als phasenverschoben-betriebene Mehrkolbenpumpe ausgebildet ist.

3. Bremssystem nach Anspruch 1 oder 2, wobei die mindestens eine Radbremszange (20) über ein Verblendventil (26) mit der Flüssigkeitsspeichereinrichtung (24) hydraulisch derart verbunden ist, dass Bremsflüssigkeit über das in einen zumindest teilgeöffneten Zustand gesteuerte Verblendventil (26) in die Flüssigkeitsspeichereinrichtung (24) transferierbar ist.

4. Bremssystem nach Anspruch 3, wobei zwischen dem Verblendventil (26) und der Flüssigkeitsspeichereinrichtung (24) ein erstes Rückschlagventil (28) angeordnet ist.

5. Bremssystem nach einem der vorhergehenden Ansprüche, wobei eine Förderseite der als im Wesentlichen gleichmäßig fördernde Pumpeinrichtung ausgebildeten Flüssigkeitsfördereinrichtung (22) über ein zweites Rückschlagventil (30) mit der mindestens einen Radbremszange (20) hydraulisch verbunden ist.

6. Bremssystem nach einem der vorhergehenden Ansprüche, wobei die als Zahnradpumpe ausgebildete Flüssigkeitsfördereinrichtung (22) eine Innenzahnradpumpe ist.

7. Bremssystem nach einem der vorhergehenden Ansprüche, wobei die Flüssigkeitsspeichereinrichtung (24) eine federlose Speicherkammer ist.

8. Bremssystem nach einem der vorhergehenden Ansprüche, wobei die Flüssigkeitsspeichereinrichtung (24) über eine Verbindungsleitung (50) mit einem Bremsflüssigkeitsreservoir (18) verbunden ist.

9. Bremssystem nach einem der vorhergehenden Ansprüche, wobei die Flüssigkeitsspeichereinrichtung (24) ein nicht-gasvorgespannter Membranspeicher ist.

10. Verfahren zum Betreiben eines Bremssystems eines Fahrzeugs mit dem Schritt:
Steigern eines Bremsdrucks in mindestens einer mit einem Hauptbremszylinder (10) hydraulisch verbundenen Radbremszange (20) durch Transferieren von Bremsflüssigkeit in die mindestens eine Radbremszange (20) mittels einer Flüssigkeitsfördereinrichtung (22);
**gekennzeichnet durch**
Pumpen von Bremsflüssigkeit aus einer Flüssigkeitsspeichereinrichtung (24) in die mindestens eine Radbremszange (20) mittels einer im Wesentlichen gleichmäßig fördernden Pumpeinrichtung (22), welche als die Flüssigkeitsfördereinrichtung (22) zusätzlich zu einer eine Hydraulik-Einheit (40) und einen Motor (34) umfassenden ESP-Vorrichtung (38) im Bremssystem ausgebildet ist (S1).

11. Verfahren nach Anspruch 10, wobei Bremsflüssigkeit mittels einer Zahnradpumpe oder einer phasenverschoben-betriebenen Mehrkolbenpumpe aus der Flüssigkeitsspeichereinrichtung (24) in die mindestens eine Radbremszange (20) gepumpt wird.

12. Verfahren nach Anspruch 10 oder 11, wobei der Bremsdruck in der mindestens einen Radbremszange (20) reduziert wird durch Steuern eines Verblendventils (26), über welches die mindestens eine Radbremszange (20) mit der Flüssigkeitsspeichereinrichtung (24) hydraulisch verbunden ist, in einen zumindest teilgeöffneten Zustand, wodurch Bremsflüssigkeit über das in den zumindest teilgeöffneten Zustand gesteuerte Verblendventil (26) in die Flüssigkeitsspeichereinrichtung (24) transferiert wird (S2).

## Claims

1. Brake system for a vehicle, having:
a master brake cylinder (10) which is hydraulically connected to at least one wheel brake caliper (20),
an ESP device (38) which comprises a hydraulic unit (40) and a motor (34);
**characterized by**
an additional fluid delivery device by means of which brake fluid can be transferred into the at least one wheel brake caliper (20);
wherein the fluid delivery device (22) is in the form of a pump device which has a substantially uniform delivery action and by means of which brake fluid can be pumped into the at least one wheel brake caliper (20) from a fluid accumulator device (24).

2. Brake system according to Claim 1, wherein the fluid delivery device (22) is in the form of a gear pump or in the form of a multi-piston pump operated with a phase offset.

3. Brake system according to Claim 1 or 2, wherein the at least one wheel brake caliper (20) is hydraulically connected to the fluid accumulator device (24) via a blending valve (26) such that brake fluid can be transferred into the liquid store device (24) via the blending valve (26) that has been adjusted in controlled fashion into an at least partially open state.

4. Brake system according to Claim 3, wherein a first check valve (28) is arranged between the blending valve (26) and the liquid store device (24).

5. Brake system according to one of the preceding claims, wherein a delivery side of the fluid delivery device (22), which is in the form of a pump device which has a substantially uniform delivery action, is hydraulically connected via a second check valve (30) to the at least one wheel brake caliper (20).

6. Brake system according to one of the preceding claims, wherein the fluid delivery device (22), which is in the form of a gear pump, is an internal-gear pump.

7. Brake system according to one of the preceding claims, wherein the fluid accumulator device (24) is a spring-free accumulator chamber.

8. Brake system according to one of the preceding claims, wherein the fluid accumulator device (24) is connected via a connecting line (50) to a brake fluid reservoir (18).

9. Brake system according to one of the preceding claims, wherein the fluid accumulator device (24) is a diaphragm accumulator without gas preload.

10. Method for operating a brake system of a vehicle, having the step:
increasing a brake pressure in at least one wheel brake caliper (20), which is hydraulically connected to a master brake cylinder (10), by transferring brake fluid into the at least one wheel brake caliper (20) by means of a fluid delivery device (22);
**characterized by**
pumping brake fluid from a fluid accumulator device (24) into the at least one wheel brake caliper (20) by means of a pump device (22) which has a substantially uniform delivery action, which pump device is formed as the fluid delivery device (22) in addition to an ESP device (38), which comprises a hydraulic unit (40) and a motor (34), in the brake system.

11. Method according to Claim 10, wherein brake fluid is pumped from the fluid accumulator device (24) into the at least one wheel brake caliper (20) by means of a gear pump or a multi-piston pump operated with a phase offset.

12. Method according to Claim 10 or 11, wherein the brake pressure in the at least one wheel brake caliper (20) is reduced by adjusting a blending valve (26), via which the at least one wheel brake caliper (20) is hydraulically connected to the fluid accumulator device (24), in controlled fashion into an at least partially open state, whereby brake fluid is transferred (S2) into the liquid accumulator device (24) via the blending valve (26) that has been adjusted in controlled fashion into the at least partially open state.

## Revendications

1. Système de freinage pour un véhicule avec
- un maître-cylindre (10), qui est en liaison hydraulique avec au moins un étrier de frein de roue (20); et
- un dispositif ESP (38), qui comprend une unité hydraulique (40) et un moteur (34);
**caractérisé par**
un dispositif de transport de liquide supplémentaire, au moyen duquel du liquide de frein peut être transféré dans ledit au moins un étrier de frein de roue (20); dans lequel le dispositif de transport de liquide (22) est réalisé en forme de système de pompe à transport essentiellement uniforme, au moyen duquel du liquide de frein peut être pompé d'un dispositif d'accumulation de liquide (24) vers ledit au moins un étrier de frein de roue (20).

2. Système de freinage selon la revendication 1, dans lequel le dispositif de transport de liquide (22) est réalisé en forme de pompe à engrenages ou de pompe à pistons multiples opérant en décalage de phase.

3. Système de freinage selon la revendication 1 ou 2, dans lequel ledit au moins un étrier de frein de roue (20) est en liaison hydraulique avec le dispositif d'accumulation de liquide (24) par l'intermédiaire d'une vanne mélangeuse (26), de telle manière que du liquide de frein puisse être transféré dans le dispositif d'accumulation de liquide (24) par l'intermédiaire de la vanne mélangeuse (26) commandée dans un état au moins partiellement ouvert.

4. Système de freinage selon la revendication 3, dans lequel un premier clapet antiretour (28) est disposé entre la vanne mélangeuse (26) et le dispositif d'accumulation de liquide (24).

5. Système de freinage selon l'une quelconque des revendications précédentes, dans lequel un côté de refoulement du dispositif de transport de liquide (22) réalisé en forme de système de pompe à transport essentiellement uniforme est en liaison hydraulique avec ledit au moins un étrier de frein de roue (20) par l'intermédiaire d'un deuxième clapet antiretour (30).

6. Système de freinage selon l'une quelconque des revendications précédentes, dans lequel le dispositif de transport de liquide (22) réalisé en forme de pompe à engrenages est une pompe à engrenage intérieur.

7. Système de freinage selon l'une quelconque des revendications précédentes, dans lequel le dispositif d'accumulation de liquide (24) est une chambre d'accumulation sans ressort.

8. Système de freinage selon l'une quelconque des revendications précédentes, dans lequel le dispositif d'accumulation de liquide (24) est relié à un réservoir de liquide de frein (18) par l'intermédiaire d'une conduite de liaison (50).

9. Système de freinage selon l'une quelconque des revendications précédentes, dans lequel le dispositif d'accumulation de liquide (24) est un accumulateur à membrane non précontraint par un gaz.

10. Procédé pour faire fonctionner un système de freinage d'un véhicule comportant l'étape suivante:
- augmenter une pression de freinage dans au moins un étrier de frein de roue (20) en liaison hydraulique avec un maître-cylindre (10) par le transfert de liquide de frein dans ledit au moins un étrier de frein de roue (20) au moyen d'un dispositif de transport de liquide (22),
**caractérisé par** le pompage de liquide de frein hors d'un dispositif d'accumulation de liquide (24) vers ledit au moins un étrier de frein de roue (20) au moyen d'un dispositif de pompe (22) à transport essentiellement uniforme, qui est réalisé (S1) en tant que dispositif de transport de liquide (22) en plus d'un dispositif ESP (38) comprenant une unité hydraulique (40) et un moteur (34) dans le système de freinage.

11. Procédé selon la revendication 10, dans lequel du liquide de frein est pompé hors du dispositif d'accumulation de liquide (24) vers ledit au moins un étrier de frein de roue (20) au moyen d'une pompe à engrenages ou d'une pompe à pistons multiples opérant en décalage de phase.

12. Procédé selon la revendication 10 ou 11, dans lequel la pression de freinage dans ledit au moins un étrier de frein de roue (20) est réduite par la commande d'une vanne mélangeuse (26), par laquelle ledit au moins un étrier de frein de roue (20) est en liaison hydraulique avec le dispositif d'accumulation de liquide (24), dans un état au moins partiellement ouvert, du liquide de frein étant ainsi transféré (S2) dans le dispositif d'accumulation de liquide (24) par l'intermédiaire de la vanne mélangeuse (26) commandée dans ledit état au moins partiellement ouvert.
